(19) **Europäisches Patentamt / European Patent Office / Office européen des brevets**

(11) **EP 1 867 389 A1**

(12) # EUROPEAN PATENT APPLICATION
published in accordance with Art. 158(3) EPC

(43) Date of publication:
**19.12.2007 Bulletin 2007/51**

(51) Int Cl.:
***B01J 35/02*** (2006.01)

(21) Application number: **05727942.4**

(22) Date of filing: **31.03.2005**

(86) International application number:
**PCT/JP2005/006242**

(87) International publication number:
**WO 2006/103781 (05.10.2006 Gazette 2006/40)**

(84) Designated Contracting States:
**DE FR GB**

(71) Applicants:
- **BABCOCK-HITACHI K.K.**
  **Chiyoda-ku**
  **Tokyo 101-0021 (JP)**
- **HONDA MOTOR CO., LTD.**
  **Tokyo 107-8556 (JP)**
- **Nippon Steel Materials Co., Ltd.**
  **Chiyoda-ku**
  **Tokio 110-8071 (JP)**

(72) Inventors:
- **KANEEDA, Masato,Hitachi, Ltd.,**
  **Chiyoda-ku, Tokyo 100-8220 (JP)**
- **IIZUKA, Hidehiro,Hitachi, Ltd.**
  **Chiyoda-ku, Tokyo 100-8220 (JP)**

- **SHINOZUKA, Norihiro,Hitachi, Ltd.**
  **Chiyoda-ku, Tokyo 100-8220 (JP)**
- **SAKANUSHI, Masahiro**
  **Wako-shi, Saitama 351-0193 (JP)**
- **TOKUSHIMA, Kimihiro**
  **Wako-shi, Saitama 351-0193 (JP)**
- **HOSOE, Hiroki**
  **Wako-shi, Saitama 351-0193 (JP)**
- **KASUYA, Masayuki,Nippon Steel Corporation**
  **Tokai-shi, Aichi 476-8686 (JP)**
- **IWASAKI, Toshio,Nippon Steel Corporation**
  **Tokai-shi, Aichi 476-8686 (JP)**
- **KONYA, Shogo,Nippon Steel Corporation**
  **Futtsu-shi, Chiba 293-8511 (JP)**

(74) Representative: **Beetz & Partner**
**Steinsdorfstrasse 10**
**80538 München (DE)**

(54) **APPARATUS FOR PURIFYING EXHAUST GAS AND CATALYST FOR PURIFYING EXHAUST GAS**

(57)    Use of a metallic material containing chromium as a substrate of an exhaust gas purifying catalyst has a problem that the chromium contained in the substrate migrates to a catalytically active component and reacts with the catalytically active component to reduce exhaust gas purification performance. This problem was eliminated by arranging on a surface of the substrate a film which inhibits the chromium contained in the substrate from migrating. The film is desirably formed by oxidizing a substrate in the air. It is also desirable that a substrate containing aluminum therein be oxidized to cause aluminum contained in the substrate to separate out and thereby form an alpha-alumina film. The film is preferably such that, when the exhaust gas purifying catalyst is heated at 850°C in the air for 300 hours, the amount of chromium migrated to the catalytically active component is controlled to 0.5 percent by weight or less based on the catalytically active component.

## FIG. 4

CATALYST 1

(a)

20
30
–O–Al–O–Al–O–Al– 40
Cr–Al–Fe 10

EP 1 867 389 A1

**Description**

Technical Field:

The present invention relates to an exhaust gas purifying apparatus for an internal combustion engine, and an exhaust gas purifying catalyst.

Background Art:

A wide variety of catalysts has been proposed for purifying exhaust gases emitted from internal combustion engines typically of automobiles, and studies have been made on three-way catalysts and exhaust gas purifying catalysts for lean-burn engines. The term "lean-burn engines" herein refer to engines that can combust a fuel at such a mixing ratio between the fuel and air (hereinafter referred to as "air fuel ratio") that air is rich and the fuel is lean. Diesel engines are also belonging to this category. An example of exhaust gas purifying catalysts for lean-burn engines can be found in Japanese Unexamined Patent Application Publication (JP-A) No. 09-85093 (Patent Document 1). This document describes that a NOx purification rate is increased by using, as a porous carrier, a NOx storage material containing a noble metal and three components of potassium (K), sodium (Na), and lithium (Li).

When the above-mentioned catalyst includes a commonly-used cordierite honeycomb as a catalyst substrate and further includes alkali metals as catalytically active components, however, the alkali metals may react with the cordierite substrate upon application of heat, and the catalyst may have a lowered catalytic activity and may undergo crack of the cordierite substrate.

As a possible solution to this, Japanese Unexamined Patent Application Publication (JP-A) No. 10-286461 (Patent Document 2) and Japanese Unexamined Patent Application Publication (JP-A) No. 2001-246252 (Patent Document 3) each disclose a NOx purifying catalyst using a metallic honeycomb substrate. Patent Documents 2 and 3 describe that, by using a metallic honeycomb substrate, the reaction between alkali metals and the substrate can be inhibited, and high purification performance can be obtained even after being subjected to an endurance test. In addition, Japanese Unexamined Patent Application Publication (JP-A) No. 05-184926 (Patent Document 4) describes that catalytic components can be inhibited from separation (delamination) by applying an alpha-alumina layer to a metallic honeycomb substrate.

PCT International Publication Number WO02/020154 A1 (Patent Document 5) discloses a technique of inhibiting the reaction between alkali metals and a substrate by forming an alumina layer on a ceramic carrier before catalytic materials are supported thereon. The formation of the alumina layer herein is conducted, for example, by applying an alumina source to the ceramic carrier and firing the applied layer.

Patent Document 1: Japanese Unexamined Patent Application Publication (JP-A) No. 09-85093
Patent Document 2: Japanese Unexamined Patent Application Publication (JP-A) No. 10-286461
Patent Document 3: Japanese Unexamined Patent Application Publication (JP-A) No. 2001-246252
Patent Document 4: Japanese Unexamined Patent Application Publication (JP-A) No. 05-184926
Patent Document 5: PCT International Publication Number WO02/020154 A1

Description of the Invention:

Problems to be solved by the Invention:

The techniques disclosed in Patent Documents 2 and 3 are intended to improve the endurance of a catalyst by using a metallic honeycomb. After intensive investigations, however, the present inventors have found that, even when a metallic honeycomb is used, the purification activity of a catalyst is significantly loweredwhen the catalyst is subjected to a thermal aging treatment (thermal endurance treatment).

Metallic honeycombs generally contain aluminum and chromium as constitutional elements. The present inventors have revealed that, when a catalytically active component comes in contact with chromium, they react with each other, and this may cause a lowered activity. In particular, when an alkali metal and/or an alkaline earth metal is contained as a catalytically active component, it easily reacts with chromium to form a multiple oxide, thus causing a lowered activity. This is probably because, when heat is applied upon a metallic honeycomb in the presence of oxygen, aluminum as an element constituting the metallic honeycomb comes to a surface layer and forms a film composed of $Al_2O_3$; however, when an alkali metal and/or an alkaline earth metal is used as a catalytically active component, the element is likely to react with chromium, and chromium coming to the surface layer of the metallic honeycomb forms a multiple oxide with the alkali metal and/or alkaline earth metal. Use of a foil containing no chromium as a foil constituting a metallic honeycomb is considered to be effective for preventing deterioration in activity of a catalyst. However, chromium element is essential for yielding oxidation resistance of a metallic honeycomb at high temperatures, and regular foils constituting metallic honeycombs, such as Fe-Cr-aluminum foils, therefore essentially contain chromium.

Patent Document 4 discloses a technique of applying a coating of alpha-alumina to a surface layer of a metallic honeycomb in order to prevent a catalytically active component from delamination. This technique, however, does not bear in mind the use of alkali metals and/or alkaline earth metals as the catalytically active component and the reaction between chromium and the catalytically active component. In addition, a simple alumina coating does not serve to inhibit the contact between alkali metals and/or alkaline earth metals and chromium when alkali metals and/or alkaline earth metals are supported as the catalytically active component.

The technique disclosed in Patent Document 5 is a technique of applying an alumina source to a ceramic honeycomb to form an alumina layer beforehand. There is, however, no disclosure about the deterioration of alkali metals and/or alkaline earth metals due to chromium.

As has been described above, Patent Documents 2 to 5 neither indicate nor disclose the above-mentioned problem.

To solve the problem, an object of the present invention is to provide an exhaust gas purifying catalyst in which chromium is free from or resistant to migration to a catalytically active component. More specifically, an object of the present invention is to provide an exhaust gas purifying apparatus, an exhaust gas purifying catalyst, and a method for producing such an exhaust gas purifying catalyst, whereby chromium contained in a metallic carrier is prevented from migrating to a catalytically active component, and the catalyst exhibits high NOx purification performance even when the catalyst is subjected to thermal aging treatment (exposed to high temperature environment).

Means for solving the problems:

According to the present invention, there is provided an exhaust gas purifying apparatus for an internal combustion engine. The apparatus includes an exhaust gas purifying catalyst arranged in an exhaust gas flow passage of an internal combustion engine, in which the gas purifying catalyst includes a substrate containing chromium; a film covering the substrate; and a catalytically active component for purifying the exhaust gas, and the film acts to inhibit chromium contained in the substrate from migrating to the catalytically active component. Thus, the exhaust gas purifying catalyst is prevented from decreasing in NOx purification performance. The catalytically active component for use in the present invention may be arranged directly or through the intermediary of a carrier on a surface of the film.

Advantages of the Invention:

According to the present invention, there is also provided a method for producing an exhaust gas purifying catalyst by heating a substrate containing chromium and aluminum in an oxidative atmosphere so as to form a film on a surface of the substrate, which film is composed of an element deposited or separated out from the substrate.

An exhaust gas purifying apparatus and an exhaust gas purifying catalyst according to embodiments of the present invention may be applied to an internal combustion engine using a catalyst including a chromium-containing metallic substrate and at least one selected from alkali metals and alkaline earth metals as a catalytically active component. In this case, the reaction between chromium and alkali metals and/or alkaline earth metals can be inhibited, the deterioration of a noble metal due to chromium can be inhibited, and NOx purification performance can be inhibited from decreasing even after the catalyst has been subjected to a thermal aging treatment. Thus, the emission of NOx from the internal combustion engine can be reduced.

Brief Description of the Drawings:

Fig. 1 is a diagram showing how a lean NOx purification rate varies depending on a gas temperature at catalyst inlet.
Fig. 2 is a diagram showing how a lean/stoichiometric NOx purification rate varies depending on a reaction time.
Fig. 3 shows diagrams each illustrating a metallographic structure, typified by chromium distribution, of a catalyst.
Fig. 4 shows schematic views each schematically illustrating a structure of a catalyst.
Fig. 5 is a diagram showing how a lean NOx purification rate varies depending on a thickness of an alpha-alumina film.
Fig. 6 is a diagram showing how a lean NOx purification rate varies depending on a total amount of supported noble metals.
Fig. 7 is a diagram showing how a lean NOx purification rate varies depending on a total amount of supported alkali metals.
Fig. 8 is a diagram showing how a lean NOx purification rate varies depending on an amount of alumina coating.
Fig. 9 is a diagram showing how a lean NOx purification rate varies depending on a number of cells.

Fig. 10 is a graph showing how a lean NOx purification rate varies depending on a shape (structure) of cells.

Fig. 11 is a schematic diagram showing an exhaust gas purifying apparatus according to an embodiment of the present invention.

Fig. 12 is an illustrative diagram showing how a metallic honeycomb substrate is formed by way of example.

Fig. 13 is a horizontal cross-sectional view showing a metallic honeycomb substrate.

Explanation of reference numerals:

10: substrate, 12: exhaust gas purifying catalyst, 20: alumina carrier particle, 30: catalytically active component, 40: alpha-alumina film, 50: alpha-alumina coating layer, 99: engine, 110: honeycomb structure, 111a: flat sheet, 111b: corrugated sheet, 120: metallic honeycomb substrate

Detailed description of the preferred Embodiments:

An exhaust gas purifying apparatus according to the present invention includes an exhaust gas purifying catalyst arranged in an exhaust gas flow passage of an internal combustion engine, in which the gas purifying catalyst includes a substrate containing chromium; a film covering the substrate; and a catalytically active component for purifying the exhaust gas with or without a carrier, and the film acts to inhibit chromium contained in the substrate from migrating to the catalytically active component. Thus, the exhaust gas purifying catalyst is prevented from decreasing in NOx purification performance. The film for covering the substrate can be, for example, an alpha-alumina film.

An exhaust gas purifying apparatus for an internal combustion engine according to the present invention may be such that the amount of chromium migrated to the catalytically active component is controlled to 0.5 percent by weight or less based on the catalytically active component after the exhaust gas purifying catalyst is subjected to heating at 850°C in the atmosphere (air) for 300 hours.

The present invention also relates to a substrate for an exhaust gas purifying catalyst, which substrate contains chromium, has a film on a surface thereof, in which the film acts to inhibit chromium contained in the substrate from migrating to a catalytically active component.

Chromium generally easily reacts with an alkali metal and/or an alkaline earth metal in the presence of oxygen ($O_2$). A reaction between $K_2CO_3$ and chromium will be illustrated below by way of example.

A thermodynamic calculation was conducted under the conditions that 1 mol of each of $K_2CO_3$, chromium, aluminum, and iron, and 1 mol of $O_2$ are present at 800°C. A calculation procedure used a thermal dynamics database MAL Windows Version (supplied from Kagaku Gijutsu-sha). As a result, all of chromium reacts with $K_2CO_3$ to form one mol of a multiple oxide of potassium and chromium, i. e. $K_2CrO_4$. As is easily understood from the above result, when potassium carbonate is in contact with chromium, aluminum, and iron, a reaction with chromium proceeds preferentially. This mechanism can be applied to other alkali metals and alkaline earth metals. That is, alkali metals and alkaline earth metals generally easily react with chromium.

Accordingly, when alkali metals and/or alkaline earth metals are used as catalytically active components, they react with chromium in the presence of $O_2$ to form multiple oxides, thereby the catalyst may be deteriorated. A lean-burn NOx purifying catalyst will be taken as an example. In this case, when the air fuel ratio is lean, the exhaust gas is brought into contact with a catalyst containing an alkali metal and a noble metal thereby to oxidize NO in the exhaust gas with the noble metal into NOx. The resulting NOx is trapped by the alkali metal to thereby trap and remove NOx in the exhaust gas. However, when the alkali metal reacts with chromium, the trapping ability of the alkali metal is lowered. Further, since a large amount of $O_2$ is present in the exhaust gas, a reaction between the alkali metal and $O_2$ takes place easily. In addition, the reaction between alkali metals and/or alkaline earth metals with chromium proceeds more with an increasing temperature.

Accordingly, contact of an alkali metal and/or an alkaline earth metal with chromium can be inhibited, and thereby the reaction between them can be prevented, by arranging a film on a substrate and thereafter supporting a catalytically active component such as an alkali metal and/or an alkaline earth metal on the film, which film acts to inhibit chromium contained in the substrate to the catalytically active component.

The film to be arranged on a surface of the substrate is preferably such a film that the amount of chromium migrated to the catalytically active component is controlled to 0.5 percent by weight or less based on the catalytically active component after an exhaust gas purifying catalyst before use is subjected to heating at 850°C in the air for 300 hours. If the amount exceeds 0.5 percent by weight, poisoning of alkali metal and/or alkaline earth metal by the action of chromium significantly may occur, resulting in lowered activity. From the above, the film is preferably such a film that the amount of chromium migrated to the catalytically active component is controlled to 0.5 percent by weight or less based on the catalytically active component after an exhaust gas purifying catalyst before use is subjected to heating at 850°C in the air for 300 hours.

Any film that satisfies the above conditions may be used as the film to be arranged on the substrate. By satisfying the conditions, the catalyst can be inhibited from having a lowered activity due to heat treatment.

A substrate for use in an exhaust gas purifying catalyst according to the present invention is a substrate containing chromium, and every substrate is effective, as long as it contains chromium. A possible example of the substrate is a metallic honeycomb structure composed of an iron-based metallic foil containing materials of every kind such as chromium, aluminum, and iron (Cr-Al-Fe).

Specifically, a substrate for use in an exhaust gas purifying catalyst according to the present invention contains chromium, and a catalytically active component to be supported by the substrate contains at least one of alkali metals and alkaline earth metals. However, if the substrate and the catalytically active component are in direct contact with each other, chromium migrates to the alkali metal and/or alkaline earth metal. A film is therefore arranged on a surface of the substrate containing chromium so as to inhibit chromium from migrating. Accordingly, the substrate for use in an exhaust gas purifying catalyst according to the present invention is a substrate which contains chromium and bears a film arranged on its surface. On the film, a catalytically active component will be arranged or supported.

It is more desirable that constitutional elements of the film are as with all or part of constitutional elements of the substrate. By configuring this, adhesion between the film and the substrate increases, the resulting film becomes free from breakage, and the migration of chromium can further be inhibited. By allowing the film to be composed of an element deposited or separated out from the substrate, the migration of chromium can be very highly effectively inhibited.

When the substrate contains aluminum, the film can be, for example, an alumina film. The amount of chromium, the amount of alkali metals, and the amount of alkaline earth metals are each preferably 1 percent by weight or less based on the total weight of the film.

The substrate can be a honeycomb structure which is a molded from an alloy foil and bonded through diffusion bonding, brazing, or both, in which the alloy contains, in terms of metallic elements, 14 to 26 percent by weight of chromium, 3.0 to 6.5 percent by weight of aluminum, and 0.02 to 0.12 percent by weight of at least one of rare earth elements including yttrium, with the balance being substantially iron.

A film composed of alpha-alumina is also preferred. A representative metallicsubstrate,20Cr-5A1-Fe alloy (chromium content: 20 percent by weight, aluminum content: 5 percent by weight, with the balance being iron) will be taken as an example. In this case, a film of alpha-alumina can be formed in a surface layer of the substrate by subjecting the substrate to heating at 1000°C or higher, and preferably 1100°C or higher. An alpha-alumina film formed as a result of oxidation of the foil constituting the honeycomb at high temperatures in an oxidative atmosphere is typically preferred in the present invention. This alpha-alumina film is very dense, is resistant to breakage, exhibits very excellent capability of inhibiting chromium frommigrating, and contributes to excellent endurance of the catalyst. Accordingly, the catalytically active component can be highly inhibited from poisoning due to chromium, by forming an alpha-alumina film according to the above procedure and thereafter supporting the catalytically active component thereon.

Instead of such alpha-alumina filming, an alpha-alumina layer may be formed by preparing an alpha-alumina slurry containing a powdered alpha-alumina and a precursor of alumina; adjusting the slurry to be acidic with nitric acid; applying a layer of the slurry; and drying and firing the applied layer. This alpha-alumina layer, however, does not act to inhibit chromium from migrating. In contrast, an alpha-alumina film prepared by the above-mentioned alpha-alumina filming has a porosity of 0.1% or less and is very dense, most of which is composed of aluminum and oxygen chemically bonded with each other. This can also be seen, for example, from the fact that the alpha-alumina film has a water absorption of substantially zero percent. In contrast, an alpha-alumina layer formed by applying an alpha-alumina slurry is composed of an aggregate of alpha-alumina particles, is inferior in denseness to the former, and therefore has a water absorption of several percent by weight or more.

Components of a foil material constituting the substrate are preferably specified so as to form an alpha-alumina film which has high adhesion and is dense. Reasons for specifying the components of the substrate will be described below. Aluminum (Al) element is essential for forming an alumina film through selective oxidation, and the resulting film acts to prevent chromium from diffusing to the catalyst layer. However, aluminum in the substrate is consumed for the formation of aluminum film, and a sufficient amount of aluminum should thereby be present in the substrate. For this reason, the lower limit of the aluminum content is set at 3.0 percent by weight. The aluminum content is, however, preferably 4.5 percent by weight or more from the viewpoint of yielding sufficient oxidation resistance.

In contrast, a large amount of aluminum may cause hardening or development of brittleness of the material, and therefore the upper limit of the aluminum content is set at 6.5 percent by weight. Chromium (Cr) element impairs the performance of alkali metals but acts to improve the adhesion and protecting ability of an alumina film formed through selective oxidation so as to improve oxidation resistance. Accordingly, the chromium content should be at least 14 percent by weight. In contrast, if it exceeds 26 percent by weight, the material may be hard and brittle, and this may markedly impair the productivity. The chromium content is therefore set at 14 to 26 percent by weight. Rare earth elements including yttrium (Y) also act to ensure the adhesion and protecting ability of the alumina film, as in chromium. For this purpose, the addition of such rare earth elements in an amount of 0.02 percent by weight or more is effective. However, an excessive addition may impair the effect contrarily, and the upper limit of the content of rare earth element is desirably set at 0.12 percent by weight.

It is preferable to heat a metallic honeycomb made of an Fe-Cr-Al alloy foil at temperatures of 1100°C or higher in the air, for forming an alpha-alumina film having high adhesion as mentioned above. If the foil is not heated to temperatures of 1100°C or higher, other aluminas than alpha-alumina which have poor denseness may be formed, and chromium may not be effectively prevented from diffusing.

The thickness of the film is preferably 0.02 $\mu$m or more and 5 $\mu$m or less. If the thickness is less than 0.02 $\mu$m, it is difficult to form a film having a constant or homogenous thickness, part of the resulting film may be broken and the reaction between chromium and the catalytically active component may occur at the broken site. If the thickness is more than 5 $\mu$m, the substrate may have poor endurance. This is because, when an alpha-alumina film having such a large thickness is formed in a surface layer of, for example, a 20Cr-5Al-Fe alloy as a representative metallic substrate by heating the substrate at temperatures of 1100°C or higher, aluminum remained in the substrate may become insufficient in amount, since the source of alumina for constituting the film is aluminum element contained in the metallic substrate.

An effective catalyst for use herein may be defined as a catalyst having a NOx purification rate after lean operation at 400°C for one minute of 80% or more, in which the "lean NOx purification rate" is calculated according to a calculation method mentioned in the after-mentioned Test Examples. In this case, the thickness of alpha-alumina film is 0.02 $\mu$m or more.

The present invention is applicable to all apparatuses for purifying exhaust gas each of which uses an exhaust gas purifying catalyst containing an alkali metal and/or an alkaline earth metal as a catalytically active component, and a substrate containing chromium. Among them, the present invention is very effective for such an exhaust gas purifying apparatus for an internal combustion engine, in which an air fuel ratio of combustion in an internal combustion engine varies in between lean and rich, part or all of NOx in the exhaust gas is trapped by the exhaust gas purifying catalyst when the air fuel ratio is lean, and the trapped NOx is purified when the air fuel ratio is stoichiometric or rich. This is because an exhaust gas purifying catalyst of this type generally uses alkali metals and/or alkaline earth metals as active components and is often exposed to a large amount of oxygen.

The present invention is also effective in such a case that a noble metal is contained as a catalytically active component. Of such noble metals, the present invention is particularly effective for rhodium (Rh), platinum (Pt), and palladium (Pd). When a heat treatment is applied while a substrate containing chromium is brought in contact with a catalytically active component including a noble metal, the noble metal may have a significantly lowered activity.

Although the reason for this has not yet been clarified, this is probably because chromium present in the catalyst layer as a multiple oxide with an alkali metal or alkaline earth metal may have some adverse effect on the noble metal. Accordingly, the deterioration of noble metals due to chromium may also be inhibited by arranging a film on a metallic substrate so as to inhibit chromium from migrating to the catalyst layer.

A NOx purifying catalyst may be arranged in an exhaust gas flow passage into which an exhaust gas having a lean air fuel ratio and another exhaust gas having a rich or stoichiometric air fuel ratio flow from an internal combustion engine. In this case, the catalytically active component can be any one that can trap and purify NOx. The catalytically active component preferably contains at least one selected from alkali metals and alkaline earth metals as a NOx trapping component; at least one of platinum, palladium, and rhodium as a NOx oxidizing component when the air fuel ratio is lean and as a reducing component for reducing trapped NOx when the air fuel ratio is stoichiometric or rich; and manganese. Thus, high NOx purification performance can be maintained when the air fuel ratio is lean, when the air fuel ratio is stoichiometric or rich, and after heat treatment.

In this case, the catalyst may contain one alkali metal but preferably contains two or more different alkali metals. This is because different elements can trap NOx at different temperatures in the lean region. In addition, the catalyst may use one noble metal, but preferably uses two or three different noble metals. This is probably because platinum predominantly acts upon an oxidation reaction of NO when the air fuel ratio is lean; and palladium and rhodium predominantly act upon a reducing reaction of trapped NOx when the air fuel ratio is stoichiometric or rich. When a catalyst contains manganese, the catalyst has increased NOx purification performance after heat treatment. This is probably because the addition of manganese may inhibit alkali metals from sintering due to heat.

Methods of preparing the exhaust gas purifying catalysts can be any of various physical preparation methods using, for example, impregnation, kneading, co-precipitation, sol-gel, ion-exchange, and/or evaporation; and preparation methods using chemical reactions. Examples of starting materials of the exhaust gas purifying catalyst include various compounds such as nitrate compounds, acetate compounds, chelate compounds, hydroxide compounds, carbonate compounds, and organic compounds; as well as metals and metal oxides.

The catalytically active component of the exhaust gas purifying catalyst may be supported on a porous carrier or not. When the active component is supported on a porous carrier, the active component is further highly dispersed, resulting in higher exhaust gas purification performance of the catalyst. The porous carrier may be supported (arranged) on the substrate. In this case, the amount of the porous carrier is preferably set at 50 g or more and 400 g or less per one liter of the substrate, which gives excellent NOx purification performance. If the amount of the porous carrier is less than 50 g, function of the porous carrier may be insufficient. If it exceeds 400 g, the porous carrier has a decreased specific surface area and may cause clogging of cell in the case of a honeycomb substrate. The porous carrier can be composed of metal oxides and multiple oxides, such as alumina, titania, silica, silica-alumina, zirconia, and magnesia. Among them, alumina is preferred. Alumina has high thermal durability and is considered to have a function of increasing the dispersibility of active components such as a NOx trapping component and a noble metal.

In a catalyst according to the present invention, alkali metals such as lithium (Li), potassium (K), sodium (Na), and cesium (Cs), and alkaline earth metals such as magnesium (Mg), calcium (Ca), strontium (Sr), and barium (Ba) may be present as compounds typified by oxides. The total amount of supported alkali metals and alkaline earth metals is, in terms of metallic element, preferably 0.25 part by mole to 2.0 parts by mole per 1.9 parts by mole of the porous carrier. The term "part by mole" is used herein to mean concentration fractions of the respective components in terms of number of moles. For example, 1. 9 parts by mole of component A to 2 parts by mole of component B means that 2 of component B is supported per 1.9 of component A in terms of number of moles, regardless of an absolute amount of component A. If the total amount of alkali metals and/or alkaline earth metals is less than 0.25 part by mole, the catalytic activity by the supported alkali metals and/or alkaline earth metals is not sufficiently improved. In contrast, if it exceeds 2.0 parts by mole, a specific surface area of the alkali metals and alkaline earth metals decreases, which is not preferable.

Although the alkali metal to be supported may be potassium only, sodium or lithium can be supported in addition to potassium, which further increases catalytic activity. This is probably because different elements can trap NOx at different temperatures in the lean region. According to the techniques disclosed by the present invention, it is possible to reduce the amount of alkali metals and alkaline earth metals to be supported in the catalyst, because the reaction between chromium and the alkali metals and alkaline earth metals is inhibited thereby to reduce the poisoning by chromium even after aging treatment.

The total amount of supported rhodium, platinum, and palladium is, in terms of metallic element, preferably 0.004 part by mole to 0.07 part by mole per 1.9 parts by mole of the porous carrier. If the total amount of rhodium, platinum, and palladium is less than 0.004 part by mole, the catalytic activity may not be sufficiently improved by the noble metals. In contrast, if it is more than 0.07 part by mole, the specific surface area of the noble metals decreases, and the cost of the catalyst may increase.

Shapes or structures of exhaust gas purifying catalysts according to the present invention may be selected in accordance with applications. Examples of usable structures are honeycomb structures made of chromium-containing or chromium-aluminum-containing iron-based alloy foils which are provided with catalytically active components applied directly thereon or with the intermediary of porous carriers on the structures. Other structures such as pellets, plates or sheets, granules, and powder can be employed, as long as a substrate containing chromium is used.

When a catalyst has a honeycomb structure, it can exhibit sufficiently high NOx purification performance even when it has only 400 cells. However, the catalyst preferably has 600 or more cells for further higher NOx purification performance. This is probably because the larger the number of cells, the geometric surface area of the catalyst increases to increase a contact area with the exhaust gas.

Cell structures may be, for example, triangular, quadrangular, hexagonal, or circular structures. In the case of hexagonal structures, highest purification performance may be expected. This is probably because catalytically active components located at the corners of the cells may efficiently work in such hexagonal cells.

Next, an exhaust gas purifying apparatus for an internal combustion engine will be illustrated.

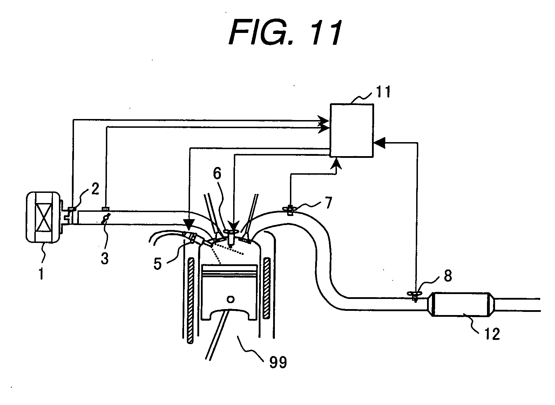

Fig. 11 is a whole schematic diagram showing an internal combustion engine including an exhaust gas purifying apparatus according to an embodiment of the present invention. The purifying apparatus according to an embodiment of the present invention is provided with the exhaust gas purifying catalyst 12 in an exhaust gas flow passage from the engine 99, which is capable of conducting lean burn operation. An air fuel ratio of the exhaust gas introduced into the catalyst is controlled by a control unit (engine control unit; hereinafter referred to as ECU) 11. An aspiration system of the internal combustion engine according to this embodiment is provided with, for example, an air-flow sensor 2 and a throttle valve 3, and an exhaust gas system is provided with, for example, anoxygenconcentration sensor (A/F sensor) 7, an exhaust gas purifying catalyst gas inlet temperature sensor 8, and the exhaust gas purifying catalyst 12. ECU is composed of, for example, an I/O as output/input interface, an LSI, a calculation processing device, a RAM and a ROM for storing a large number of control programs, and a timer counter.

The above-mentioned exhaust gas purifying apparatus works as follows. After aspirated air into the engine is filtered by an air-cleaner 1, its amount is measured by an air flow sensor 2. Then, it goes through a throttle valve 3 and receives fuel injection from an injector 5 to form a mixed fuel gas, which is sent to the engine 99. Air flow sensor signals and signals of other sensors are input into the ECU 11. The ECU 11 determines an operation air-fuel ratio by evaluating operation conditions of the internal combustion engine and of the exhaust gas purifying catalyst, and controls, for example, injection time of the injector 5 so as to set a fuel concentration of the mixed fuel gas at a predetermined value.

The mixed fuel gas aspirated into the cylinder is ignited by an ignition plug 6 controlled by signals from the ECU 11 thereby to combust the fuel gas. Combusted exhaust gas is introduced into an exhaust gas purification system. An exhaust gas purifying catalyst 12 for lean burn combustion is disposed in the exhaust gas purification system and at the time of stoichiometric operation, NOx, HC, and CO in the exhaust gas are purified by its three way catalytic function. At the time of lean operation, the catalyst purifies NOx by its NOx trapping function and at the same time it purifies HC and CO by its combustion function.

The ECU 11 always judges NOx purification capability of the exhaust gas purifying catalyst at the lean operation and gives signals to switch the operation to stoichiometric or rich operation when the purification capability becomes insufficient. By this method, NOx purification capability can be recovered. According to the exhaust gas purifying apparatus, it is possible to effectively reduce an emission of NOx from all of the internal combustion engines that conduct lean operation and stoichiometric or rich operation.

EXAMPLES

Some specific examples or embodiments of the present invention will be illustrated below, which are, however, by no means intended to limit the scope of the present invention.

(Preparation Method of NOx Purifying Catalyst)

A metallic honeycomb substrate was prepared by placing a BNi-5 brazing filler metal in between a corrugated foil and a flat foil, and carrying out vacuum brazing at 1200°C for ten minutes. The corrugated foil and the flat foil were each a stainless steel foil containing 20 percent by weight of chromium, 5 percent by weight of aluminum, and 0.08 percent by weight of REM (generic name of a mixture of light rare earth elements such as cerium (Ce) and lanthanum (La)). The metallic honeycomb substrate (400 cells per square inch) was fired by holding at 1100°C in the air (atmosphere) for one hour to thereby form an alpha-alumina film on a surface layer of the metallic honeycomb substrate. The film had a thickness of 0.7 $\mu$m. Then, an alumina-coated honeycomb was prepared by preparing an alpha-alumina slurry containing a powdered alpha-alumina and a precursor of alumina; adjusting the slurry to be acidic with nitric acid; applying a layer of the slurry to the metallic honeycomb substrate; and drying and firing the applied layer. The alumina-coatedhoneycomb was coated with alumina in an amount of 1. 9 mol of per one liter of the apparent volume of the honeycomb.

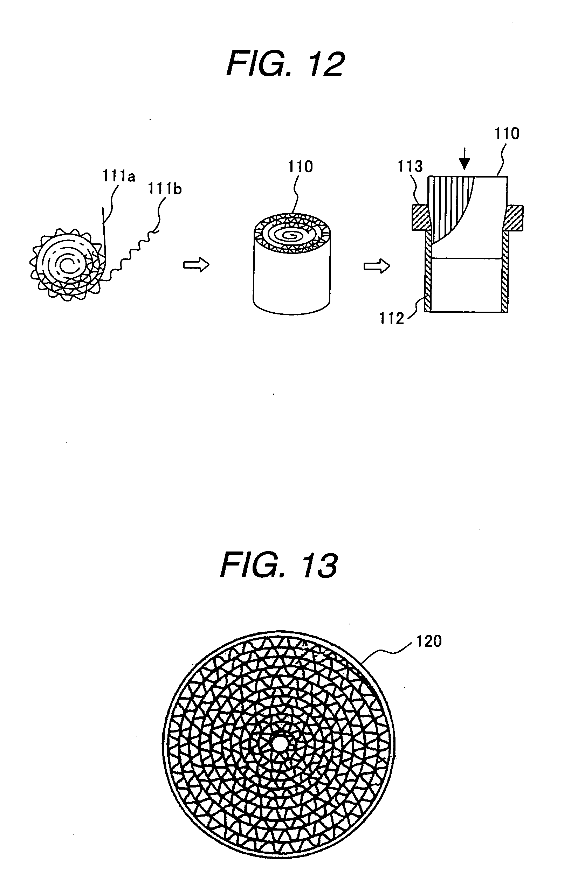

Fig. 12 shows a method for forming a metallic honeycomb substrate by way of example. Initially, a honeycomb structure was prepared by overlaying a stainless steel foil flat sheet 111a and a stainless steel foil corrugated sheet 111b with each other, and coiling the resulting article into a cylinder. The honeycomb structure 110 was inserted into an outer cylinder 112 using a press-fitting guide 113 and thereby yielded a metallic honeycomb substrate. The metallic honeycomb substrate was fired by heating and holding at temperatures around 1100°C in the atmosphere to thereby form an alpha-alumina film on a surface layer of the metallic honeycomb substrate. Fig. 13 shows a horizontal cross-sectional view of the resulting metallic honeycomb substrate 120.

The alumina-coated honeycomb was impregnated with a first impregnation component, dried at 120°C, and then fired at 600°C for one hour. The first impregnation component was a cerium nitrate solution. Next, the cerium-supporting honeycomb was impregnated with a second impregnation component, dried at 200°C, and then fired at 600°C for one hour. The second impregnation component was a mixture containing a potassium acetate solution, a sodium nitrate solution, a lithium nitrate solution, and a titanium sol. The honeycomb supporting cerium, potassium, sodium, and titanium was impregnated with a third impregnation component, dried at 200°C, and then fired at 600°C for one hour. The third impregnation component was a mixture of a diamminedinitroplatinum nitrate solution, a diamminedinitropalladium nitrate solution, a rhodium nitrate solution, and a solution of mixture of manganese nitrate and potassium acetate. The second impregnation component and the third impregnation component contained the same potassium raw material. Thereafter, a heat treatment as an aging treatment was conducted in an electric furnace at 850°C in the atmosphere for 300 hours. Thus, Catalyst Example 1 was obtained. Catalyst Example 1 contained, per one liter of the honeycomb, 190 g of alumina, and, in terms of elements, 27 g of cerium, 12 g of sodium, 16 g of potassium, 1.5 g of lithium, 4 g of titanium, 14 g of manganese, 0.1 g of rhodium, 2.8 g of platinum, and 1.4 g of palladium.

In addition, Catalyst Comparative Example 1 was prepared by the preparation procedure of Catalyst Example 1, except that the formation of alpha-alumina film was not conducted. (Method for Evaluating Catalytic Performance)

A NOx purification performance test was conducted under the following conditions in order to evaluate the performance of catalysts. Specifically, a sample honeycomb catalyst having a capacity of 10 cc was fixed in a quartz glass tubular reactor. This tubular reactor was introduced into an electric furnace and heated under control so that the temperature of a gas introduced into the tubular reactor was within a range from 200°C to 500°C. As the gas to be introduced into the tubular reactor, a stoichiometric model gas and a lean model gas were introduced in alternate order while switching every three minutes. The "stoichiometric model gas" herein refers to a model gas as an assumed exhaust gas when an engine of an automobile is operated at a stoichiometric air fuel ratio. The "lean model gas" refers to an assumed exhaust gas when the engine of the automobile is operated in lean burn operation. The stoichiometric model gas contained, as its composition, 1000 ppm of NOx, 600 ppm of $C_3H_6$, 0.5% of CO, 5% of $CO_2$, 0.5% of $O_2$, 0.3% of $H_2$, and 10% of $H_2O$, with the balance being $N_2$. The lean model gas contained, as its composition, 600 ppm of NOx, 500 ppm of $C_3H_6$, 0.1% of CO, 10% of $CO_2$, 5% of $O_2$, and 10% of $H_2O$ with the balance being $N_2$.

A lean NOx purification rate was determined according to the following equation.

$$\text{Lean NOx purification rate (\%)} = ((\text{NOx concentration at}$$
$$\text{the up-stream of the catalyst one minute after the operation}$$
$$\text{is switched to lean operation}) - (\text{NOx concentration at the}$$
$$\text{down-stream of the catalyst one minute after the operation is}$$
$$\text{switched to lean operation}))/((\text{NOx concentration at the}$$
$$\text{up-stream of the catalyst one minute after the operation is}$$
$$\text{switched to lean operation}) \times 100$$

The method for evaluating the catalytic performance by the above procedure will be referred to as "Evaluation Method 1".

(Example 1: Effect of Alpha-Alumina Filming)

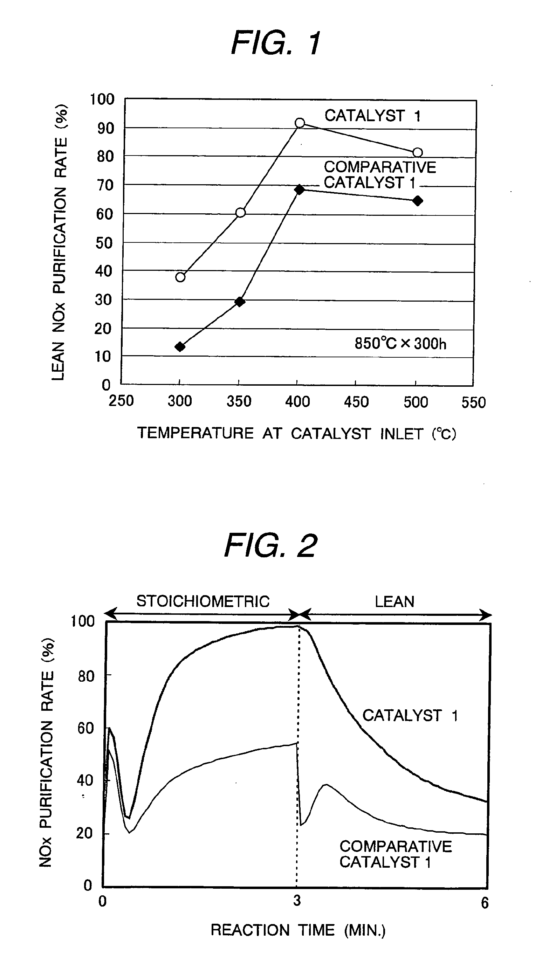

Catalyst Example 1 and Catalyst Comparative Example 1 were evaluated according to Evaluation Method 1. The results are shown in Figs. 1 and 2. Fig. 1 demonstrates that Catalyst Example 1 had higher lean NOx purification performance than Catalyst Comparative Example 1. In Catalyst Example 1, the metallic honeycomb structure had been subjected to alpha-alumina filming beforehand. An activity in the lean operation region is predominantly due to base points, namely, alkali metals, in the catalyst. Accordingly, it is obvious that the deterioration of alkali metals is inhibited by forming an alpha-alumina film.

Fig. 2 shows the NOx purification rates of the two catalysts at 350°C in the stoichiometric and lean regions. The NOx purification rates of the catalysts herein were determined according to the following equation.

$$\text{NOx purification rate (\%)} = ((\text{NOx concentration at the}$$
$$\text{up-stream of the catalyst}) - (\text{NOx concentration at the}$$
$$\text{down-stream of the catalyst}))/(\text{NOx concentration at the}$$
$$\text{up-stream of the catalyst}) \times 100$$

It is shown that Catalyst Example 1 has high performance in its activity not only in the lean region but also in the stoichiometric region. An activity in the stoichiometric region is predominantly due to noble metals in the catalyst. Accordingly, it is obvious that the formation of an alpha-alumina film inhibits noble metals from deterioration.

The chromium contents in catalytic components of Catalyst Example 1 and Catalyst Comparative Example 1 were measured. Catalyst Example 1 had a chromium content in terms of metallic element of 0.07 percent by weight; and in contrast, Catalyst Comparative Example 1 had a chromium content in terms of metallic element of 2 percent by weight.

(Example 2: Investigation on Inhibition of Chromium Migration)

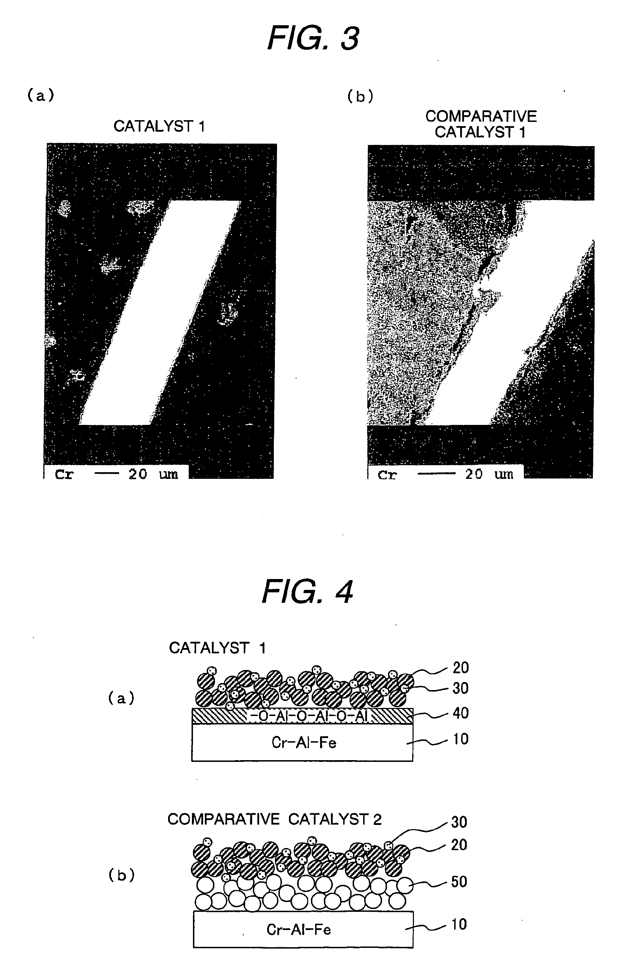

The structures of Catalyst Example 1 and Catalyst Comparative Example 1 were determined with an electron probe micro analyzer (EPMA), and distributions of chromium were determined. The results are shown in Fig. 3. Fig. 3 (a) demonstrates that Catalyst Example 1 which had been subjected to an alpha-alumina filming was substantially free from migration of chromium to the catalyst layer. In contrast, Fig. 3(b) demonstrates that Catalyst Comparative Example 1 which had not been subjected to an alpha-alumina filming underwent migration of chromium to the catalyst layer.

These results show that the alpha-alumina filming inhibits chromium from migrating to the catalyst layer.

(Example 3: Comparison with Alpha-Alumina Coating)

A catalyst as Catalyst Comparative Example 2 was prepared by the preparation procedure of Catalyst Example 1, except for forming, instead of the alpha-alumina film, an alpha-alumina layer by preparing an alpha-alumina slurry containing a powdered alpha-alumina and a precursor of alumina; adjusting the slurry to be acidic with nitric acid; applying a layer of the slurry to the substrate; and drying and firing the applied layer. Catalyst Example 1 and Catalyst Comparative Example 2 are shown in Fig. 4 for the sake of comparison. Fig. 4 illustrates a substrate 10, an alumina carrier particle 20, a catalytically active component 30, an alpha-alumina film 40, and an alpha-alumina coating layer 50. In Catalyst Example 1 shown in Fig. 4(a), most of the alpha-alumina film 40 is composed of aluminum and oxygen chemically bonded with each other.

In contrast, in Catalyst Comparative Example 2 shown in Fig. 4(b), the alpha-alumina coating layer 50 is composed of an aggregation of alpha-alumina particles. Catalyst Comparative Example 2 was subjected to measurement according to Evaluation Method 1 and was found to have a lean NOx purification rate at 400°C of 70%, which is a substantially equivalent activity to that of Catalyst Comparative Example 1. The chromium content in catalytic components of Catalyst Comparative Example 2 was determined and was found to be, in terms of metallic element, 2 percent by weight. These results show that the coating of an alpha-alumina slurry in advance is not effective to inhibit the activity from decreasing due to migration of chromium.

(Example 4: Comparison on Oxidation Treatment Temperatures)

A catalyst as Catalyst Comparative Example 3 was prepared by the preparation procedure of Catalyst Example 1, except for carrying out oxidation of the substrate in the atmosphere at a temperature of 800°C for one hour. A comparison between Catalyst Example 1 and Catalyst Comparative Example 3 demonstrates that Catalyst Example 1 which had been subjected to oxidation at 1100°C showed a high NOx purification activity in terms of activity at 400°C of more than 90%; and, in contrast, Catalyst Comparative Example 3 which had been subjected to oxidation at 800°C had an insufficient NOx purification activity in terms of activity at 400°C of less than 70%.

(Example 5: Thickness of Alpha-Alumina Film)

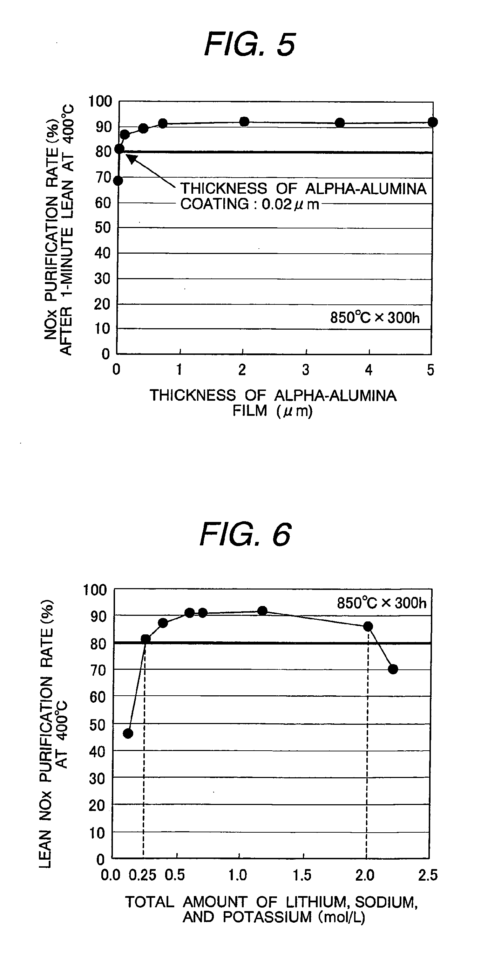

A series of catalysts having different thicknesses of alpha-alumina films was prepared by the preparation procedure of Catalyst Example 1, except for carrying out alpha-alumina filming for different time periods. The catalysts were each subjected to an aging treatment in an electric furnace at 850°C in the atmosphere for 300 hours. The lean NOx purification rates at 400°C of the resulting catalysts are shown in Fig. 5. Fig. 5 shows that the catalysts having thicknesses of the alpha-alumina films of 0.02 $\mu$m or more and 5 $\mu$m or less had activities at 400°C of more than 80%. In a catalyst having a thickness of the alpha-alumina film of 0.02 $\mu$m had a chromium content in catalytically active components of 0.50 percent by weight in terms of metallic element. These results show that catalysts exhibit high NOx purification activities when the thicknesses of the alpha-alumina films fall within a range of 0.02 $\mu$m or more and 5 $\mu$m or less.

(Example 6: Variation in Amount of Alkalis)

A series of catalysts was prepared by the procedure of Catalyst Example 1, except for varying the total amount of supported alkali metals, and the catalysts were evaluated according to Evaluation Method 1. The compositional ratios of the alkali metals were set as with Catalyst Example 1. The results are shown in Fig. 6. Fig. 6 demonstrates that catalysts exhibit high purification rates in terms of activity at 400°C of more than 80% when the total amount of supported alkali metals (lithium, sodium, and potassium) falls within a range of 0.25 mol/L or more and 2.0 mol/L or less.

(Example 7: Variation in Amount of Noble Metals)

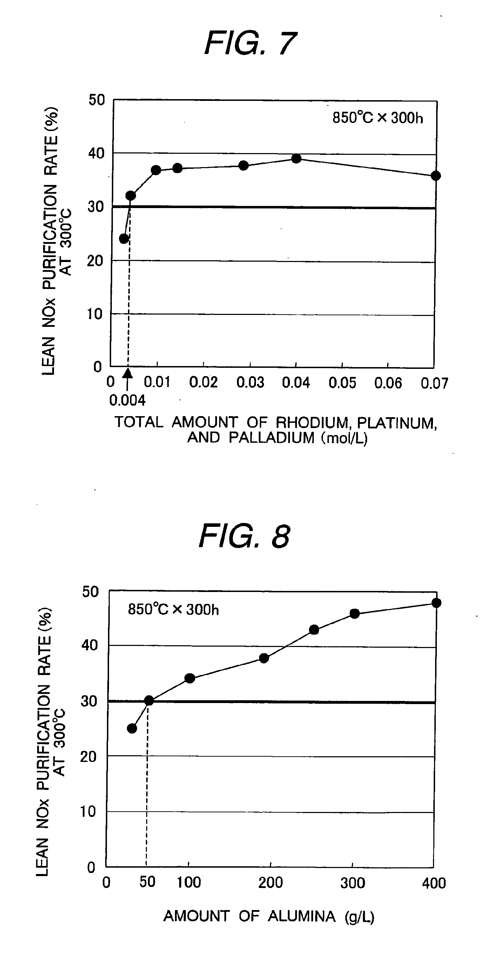

A series of catalysts was prepared by the procedure of Catalyst Example 1, except for varying the amount of supported noble metals, and the catalysts were evaluated according to Evaluation Method 1. The compositional ratios of the noble metals were set as with Catalyst Example 1. The results are shown in Fig. 7. Fig. 7 demonstrates that catalysts exhibit high purification rates in terms of activity at 300°C of more than 30% when the total amount of supported noble metals (rhodium, platinum, and palladium) falls within a range of 0.004 mol/L or more and 0.07 mol/L or less.

(Example 8: Variation in Amount of Alumina Coating)

A series of catalysts was prepared by the procedure of Catalyst Example 1, except for varying the amount of alumina coating, and the catalysts were evaluated according to Evaluation Method 1. The results are shown in Fig. 8. Fig. 8 demonstrates that catalysts exhibit high purification rates in terms of activity at 300°C of more than 30% when the amount of alumina coating falls within a range of 50 g/L or more and 400 g/L or less.

(Example 9: Number of Cells)

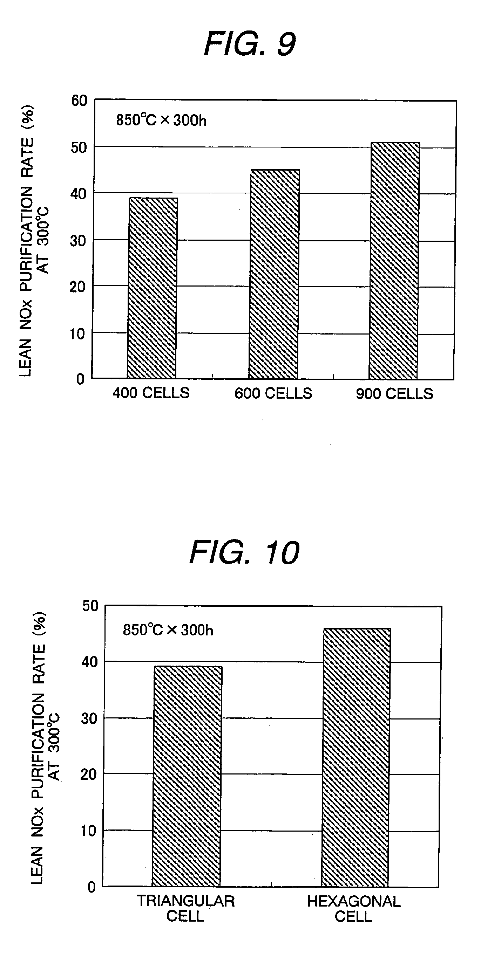

A series of catalysts having different numbers of cells in the metallic honeycomb substrates were prepared by the preparation procedure of Catalyst Example 1, except for changing the number of cells in the metallic substrate to 600 or 900. The lean NOx purification rates at 300°C of the catalysts are shown in Fig. 9. Fig. 9 demonstrates that catalysts exhibit high NOx purification rates in terms of activity at 300°C of more than 40% when the number of cells is more than 600. Accordingly, it is obvious that catalysts exhibit high NOx purification activity when they have 600 or more cells in the honeycomb substrates.

(Example 10: Cell Structure)

A catalyst having another cell structure was prepared by the preparation procedure of Catalyst Example 1, except for using a metallic honeycomb substrate having hexagonal cells. The lean NOx purification rate at 300°C of this catalyst was measured, and the result is shown in Fig. 10. Fig. 10 demonstrates that a catalyst having hexagonal cells exhibits a high NOx purification rate in terms of activity at 300°C of more than 40%. It is obvious that a catalyst having hexagonal cells exhibits a high NOx purification activity.

Industrial Applicability:

Exhaust gas purifying apparatuses and exhaust gas purifying catalysts according to the present invention can be applied for purifying exhaust gas of internal combustion engines typically of automobiles.

**Claims**

1. An exhaust gas purifying apparatus for an internal combustion engine, the apparatus comprising an exhaust gas purifying catalyst arranged in an exhaust gas flow passage of an internal combustion engine, wherein the exhaust gas purifying catalyst includes: a substrate containing chromium; a film covering the substrate; and a catalytically active component for purifying the exhaust gas, and wherein the film acts to inhibit chromium contained in the substrate from migrating to the catalytically active component.

2. The exhaust gas purifying apparatus for an internal combustion engine, according to Claim 1, wherein the film acts so that the amount of chromium migrated from the substrate to the catalytically active component is controlled to 0.5 percent by weight or less based on the catalytically active component.

3. The exhaust gas purifying apparatus for an internal combustion engine according to Claim 1, wherein the exhaust gas purifying catalyst includes at least one selected from the group of alkali metals and alkaline earth metals as the catalytically active component.

4. The exhaust gas purifying apparatus for an internal combustion engine according to Claim 1, wherein the substrate is composed of a metal containing iron.

5. The exhaust gas purifying apparatus for an internal combustion engine according to Claim 1, wherein the film mainly includes one of constitutional elements of the substrate.

6. The exhaust gas purifying apparatus for an internal combustion engine according to Claim 1, wherein the film includes an element deposited or separated out from the substrate.

7. The exhaust gas purifying apparatus for an internal combustion engine according to Claim 1, wherein the substrate contains aluminum, and wherein alpha-alumina occupies 90 percent by weight or more of the film.

8. The exhaust gas purifying apparatus for an internal combustion engine according to Claim 1, wherein the substrate is a honeycomb structure molded from an alloy foil and bonded through diffusion bonding, brazing, or both, and wherein the alloy includes, in terms of metallic elements, 14 to 26 percent by weight of chromium, 3.0 to 6.5 percent by weight of aluminum, and 0.02 to 0.12 percent by weight of at least one of rare earth elements including yttrium, with the balance being substantially iron.

9. The exhaust gas purifying apparatus for an internal combustion engine according to Claim 1, wherein the film has been formed by heating and oxidizing the substrate at temperatures of 1100°C or higher in an oxidative atmosphere.

10. The exhaust gas purifying apparatus for an internal combustion engine according to Claim 1, wherein the film has a thickness of 0.02 $\mu$m or more and 5 $\mu$m or less.

11. The exhaust gas purifying apparatus for an internal combustion engine according to Claim 1, wherein an air fuel ratio of combustion in the internal combustion engine varies in between lean and rich, wherein some or all of NOx in the exhaust gas is trapped by the exhaust gas purifying catalyst when the air fuel ratio is lean, and wherein the trapped NOx is purified when the air fuel ratio is stoichiometric or rich.

12. The exhaust gas purifying apparatus for an internal combustion engine according to Claim 1, wherein the exhaust gas purifying catalyst further includes a noble metal as the catalytically active component.

13. The exhaust gas purifying apparatus for an internal combustion engine according to Claim 1, wherein the exhaust gas purifying catalyst includes: at least one element selected from the group of alkali metals ; at least one noble metal selected from the group of rhodium (Rh), platinum (Pt), and palladium (Pd); and manganese (Mn) as the catalytically active component.

14. The exhaust gas purifying apparatus for an internal combustion engine according to Claim 1, wherein the exhaust gas purifying catalyst includes a catalytically active component supported through the intermediary of a porous carrier on a surface of the substrate, and wherein the porous carrier contains alumina.

15. The exhaust gas purifying apparatus for an internal combustion engine according to Claim 1, wherein the exhaust gas purifying catalyst includes a catalytically active component supported through the intermediary of a porous carrier on a surface of the substrate, wherein the catalytically active component includes at least one selected from the group of alkali metals and alkaline earth metals, and wherein the total amount of alkali metals or alkaline earth metals is, in terms of metallic elements, 0.25 part by mole to 2.0 parts by mole per 1.9 parts by mole of the porous carrier.

16. The exhaust gas purifying apparatus for an internal combustion engine according to Claim 1, wherein the exhaust gas purifying catalyst includes a catalytically active component supported through the intermediary of a porous carrier on a surface of the substrate, wherein the catalytically active component includes at least one noble metal selected from the group of rhodium (Rh), platinum (Pt), and palladium (Pd), and wherein the total amount of rhodium, platinum, and palladium is, in terms of metallic elements, 0.004 part by mole to 0.07 part by mole per 1.9 parts by mole of the porous carrier.

17. The exhaust gas purifying apparatus for an internal combustion engine according to Claim 1, wherein the exhaust gas purifying catalyst includes a catalytically active component supported through the intermediary of a porous carrier on a surface of the substrate, and wherein the amount of the porous carrier is 50 g to 400 g per one liter of the substrate.

18. The exhaust gas purifying apparatus for an internal combustion engine according to Claim 1, wherein the substrate is a metallic substrate, and wherein the metallic substrate has 600 or more cells.

19. The exhaust gas purifying apparatus for an internal combustion engine according to Claim 1, wherein the substrate is a metallic substrate, and wherein the metallic substrate has cells being hexagonal in cross section.

20. An exhaust gas purifying catalyst comprising: a substrate containing chromium; a film covering the substrate; and a catalytically active component arranged on a surface of the film, wherein the film acts to inhibit chromium contained in the substrate from migrating to the catalytic component.

21. The exhaust gas purifying catalyst according to Claim 20, wherein the film acts so that the amount of chromium migrated from the substrate to the catalytically active component is controlled to 0.5 percent by weight or less based on the catalytically active component.

22. A method for producing an exhaust gas purifying catalyst, the method comprising the steps of applying heat to a substrate containing iron, chromium, and aluminum in an oxidative atmosphere to thereby yield a film of an element deposited from the substrate; and allowing a catalytically active component including at least one selected from the group of alkali metals and alkaline earth metals to be supported on a surface of the film.

23. An exhaust gas purifying apparatus, the apparatus comprising an exhaust gas purifying catalyst arranged in an exhaust gas flow passage of an internal combustion engine, the exhaust gas purifying catalyst including a substrate composed of a metallic material; and catalytically active component supported directly or through the intermediary of a porous carrier on a surface of the substrate, the catalyst containing at least one selected from the group of alkali metals and alkaline earth metals as the catalytically active component, and the substrate containing chromium, wherein the apparatus further comprises a film on a surface of the substrate, and wherein the film acts to inhibit chromium contained in the substrate from migrating to the catalytically active component.

24. The exhaust gas purifying apparatus for an internal combustion engine according to Claim 23, wherein the film has been formed by oxidizing the substrate.

25. The exhaust gas purifying apparatus for an internal combustion engine according to Claim 24, wherein the substrate contains aluminum, and wherein the film includes alpha-alumina as a deposit of aluminum from the substrate.

26. An exhaust gas purifying catalyst comprising a substrate composed of a metallic material; and a catalytically active component supported directly or through the intermediary of a porous carrier on a surface of the substrate, wherein the catalyst contains at least one selected from the group of alkali metals and alkaline earth metals as the catalytically active component, wherein the substrate contains chromium, wherein the catalyst further comprises a film on a surface of the substrate, and wherein the film acts to inhibit chromium contained in the substrate from migrating to the catalytically active component.

27. The exhaust gas purifying catalyst according to Claim 26, wherein the film has been formed by oxidizing the substrate.

28. The exhaust gas purifying catalyst according to Claim 27, wherein the substrate contains aluminum, and wherein the film includes alpha-alumina as a deposit of aluminum from the substrate.

## FIG. 1

## FIG. 2

# FIG. 3

(a)

CATALYST 1

Cr ——— 20 um

(b)

COMPARATIVE
CATALYST 1

Cr ——— 20 um

# FIG. 4

CATALYST 1

(a)

-O-Al-O-Al-O-Al

Cr-Al-Fe

20
30
40
10

COMPARATIVE CATALYST 2

(b)

Cr-Al-Fe

30
20
50
10

## FIG. 5

## FIG. 6

## FIG. 7

850°C × 300h

LEAN NOx PURIFICATION RATE (%) AT 300°C

TOTAL AMOUNT OF RHODIUM, PLATINUM, AND PALLADIUM (mol/L)

## FIG. 8

850°C × 300h

LEAN NOx PURIFICATION RATE (%) AT 300°C

AMOUNT OF ALUMINA (g/L)

## FIG. 9

## FIG. 10

# FIG. 11

# FIG. 12

# FIG. 13

## INTERNATIONAL SEARCH REPORT

| | International application No. |
|---|---|
| | PCT/JP2005/006242 |

A.  CLASSIFICATION OF SUBJECT MATTER
    Int.Cl⁷ B01J35/02, B01D53/86, 53/94, F01N3/10

According to International Patent Classification (IPC) or to both national classification and IPC

B.  FIELDS SEARCHED

Minimum documentation searched (classification system followed by classification symbols)
    Int.Cl⁷ B01J21/00-38/74, B01D53/86, 53/94, F01N3/10

Documentation searched other than minimum documentation to the extent that such documents are included in the fields searched
    Jitsuyo Shinan Koho            1922-1996   Jitsuyo Shinan Toroku Koho   1996-2005
    Kokai Jitsuyo Shinan Koho      1971-2005   Toroku Jitsuyo Shinan Koho   1994-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 8-299808 A (Nippon Steel Corp.), 19 November, 1996 (19.11.96), | 1,2,4-10,12, 14,16-21 |
| Y | Claims; Par. Nos. [0006], [0014] to [0017], [0026] to [0030] (Family: none) | 3,11,13,15, 22-28 |
| X | JP 8-332394 A (Calsonic Corp.), 17 December, 1996 (17.12.96), Claims; Par. Nos. [0003] to [0005], [0017], | 1,2,4-7,9, 10,12,14, 16-21 |
| Y | [0029], [0032] to [0042] (Family: none) | 3,11,13,15, 22-28 |
| Y | JP 2003-144926 A (Hitachi, Ltd.), 20 May, 2003 (20.05.03), Claims; Par. No. [0029] (Family: none) | 3,11,13,15, 22-28 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 June, 2005 (23.06.05) | 12 July, 2005 (12.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 867 389 A1**

<table>
<tr><td colspan="2" align="center">**INTERNATIONAL SEARCH REPORT**</td><td>International application No.<br>PCT/JP2005/006242</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 7-316746 A (Nippon Steel Corp.),<br>05 December, 1995 (05.12.95)<br>(Family: none) | 1-28 |
| A | JP 57-87837 A (Toyota Motor Corp.),<br>01 June, 1982 (01.06.82)<br>(Family: none) | 1-28 |

Form PCT/ISA/210 (continuation of second sheet) (January 2004)

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9085093 A
- JP 10286461 A
- JP 2001246252 A
- JP 5184926 A
- WO 02020154 A1